# EUROPEAN PATENT SPECIFICATION

(11) **EP 2 810 821 B1**
(45) Date of publication and mention of the grant of the patent: **23.03.2016**
(21) Application number: 13382216.3
(22) Date of filing: 06.06.2013
(51) Int. Cl.: B60N 2/56, B60N 2/68

(54) **BACK-REST STRUCTURE FOR VEHICLE SEAT**
RÜCKENLEHNENSTRUKTUR FÜR FAHRZEUGSITZ
STRUCTURE DE DOSSIER POUR SIÈGE DE VÉHICULE

(43) Date of publication of application: 10.12.2014
(73) Proprietor: Grupo Antonlín-Ingeniería, S.A., 09007 Burgos (ES)
(72) Inventor: Sadornil Santamaría, Juan Carlos, 09007 Burgos (ES); Alfonso Ausín, Gisleno, 09007 Burgos (ES)
(74) Representative: Capitán García, Maria Nuria

(56) References cited:
- EP-A1- 0 749 867
- EP-A2- 1 950 086
- DE-A1- 10 148 364
- DE-U1-202006 006 834
- DE-U1-202008 015 401
- JP-A- 2001 150 996
- US-A- 5 165 756
- US-A- 5 845 382
- US-A1- 2004 227 389

## Description

### TECHNICAL FIELD OF THE INVENTION

The present invention relates to a back-rest structure for an automobile.

### BACKGROUND OF THE INVENTION

An automobile seat, according to a basic configuration, consists in a cushion or seat base that can be attached directly to the vehicle chassis and comprises a sturdy structure covered by a cushioned cover to which a back-rest is joined in a fixed or hinged manner, the latter also comprising a sturdy structure and a cushioned cover. In addition, said back-rest comprises in its top part a headrest for safety reasons.

As anticipated above, the invention relates to a back-rest structure.

Seat back-rest structures are known consisting of one or several tubular steel elements joined for example by welded unions, to which other elements can be attached to provide additional functions.

Examples of these structures are described in documents US5165756, US5845382 and EP0749867.

Due to the geometrical limitations of this type of structures, they typically have a constant cross section sized to withstand the maximum loads, even if these are present only locally in certain areas of the structure. This leads to an oversizing of the structure in its remaining areas, which are not subject to said maximum loads, with the resulting increase in cost and weight.

Back-rest structures are also known consisting of the combination of several metal profiles and sheets with different characteristics regarding their cross section and thickness, normally attached by welded unions.

Examples of these structures are described in documents JP2001150996, DE202006006834 and US20040227389.

In this case, the combination of elements with different physical and therefore structural features allows preventing the oversizing of the structure that forms the seat back-rest.

However, the use of a large number of components attached to one another to obtain the seat back-rest structure can lead to dimensional faults in the structure, due to the different assembly tolerances of each component which accumulate in the assembly of each component to form the structure.

In addition, the manufacturing processes for the metal sheets by stamping are complex, which increases the cost of these parts and thus of the seat back-rest structure.

In addition, in the cases described above the use of welded unions has a negative effect on both the assembly process for the structure and on its reliability.

The use of welded unions increases the complexity of the structure assembly process, implying a greater risk of defects in said structure due to poor fitting of the various components that make up the structure during their joining operation.

Additionally, welded unions tend to fail in fatigue conditions due to deformation of the parts and to the change in the internal structure of the materials resulting from the heating of the welding process itself. This has a negative effect on their reliability, and thus on the reliability of the structure.

Other known structure types are those based on the use of moulded light structures.

An example of this type of structure is given in document EP1950086.

The use of this type of materials provides great freedom of design in the structures, which results in a simplification of said structures and their manufacture and assembly process.

However, the shape of the structure components and the manufacturing processes of said components are generally harder to control and are more complex than those associated with steel components.

For this reason, for the seat back-rest structures produced with light alloys to have the mechanical strength needed to withstand the typical loads in a seat back-rest, complex specific designs are necessary to allow making compatible the specifications of the light alloy moulding processes and those of the component to obtain.

In addition, although light alloy moulding techniques allow a greater freedom of design that enables optimisation of component geometry, it is not always possible to obtain mechanical properties comparable to those of equivalent components made of steel.

Moreover, other seat back-rest structures are known that are made using a combination of metallic and plastic materials.

This technology allows making use of the advantages of plastic materials regarding freedom of design, and of metallic materials regarding their mechanical properties. Therefore, the structures based on this technology allow simplifying both the structure and the manufacturing and assembly process thereof.

The closest prior art to the invention belonging to this hybrid technology is considered to be patent DE202008015401.

This patent describes a seat back-rest structure constituted by a closed metal frame with a U-shaped cross section, configured such that the open side of said U-section is in a direction x or direction of motion of the vehicle.

The U-shaped section of said closed metal frame defines a cavity in which a plastic ring-shaped element is inserted by way of reinforcement. The configuration of said metal frame forces a direction of assembly of the plastic material element along the direction x defined above.

When the vehicle is involved in a collision, the vehicle seat and specifically its back-rest is subjected to a set of loads in the direction x.

Given the configuration of the seat back-rest structure described in document DE202008015401, wherein the plastic element is mounted on the metallic frame that is closed in a direction x because the cross section of said frame comprises a cavity whose opening is facing said direction, in a collision situation the elements that form said structure tend to separate, resulting in a poor mechanical performance of the back-rest structure along the direction x.

On another hand, the shape of the closed metallic frame such as that described in patent DE202008015401 involves the use of processes allowing to obtain complex shapes such as sheet stamping or cast moulding, which increases the cost of obtaining the seat back-rest structure.

### DESCRIPTION OF THE INVENTION

In view of the aforementioned drawbacks of the prior art, the object of the invention is to simplify the back-rest structure for a seat, as well as that of each of its component elements, and thereby the manufacturing and assembly process for said back-rest structure, maintaining a reliable structure with good mechanical behaviour and low weight.

Therefore, the invention relates to a combination of an element of a plastic material and an element of a metallic material joined by joining means such that they form a structure able to withstand the loads to which a seat back-rest is subjected.

Specifically, the invention relates to a back-rest structure for an automobile vehicle that comprises:
- a plastic ring:
   ∘ comprising four parts, a first lateral part, a second lateral part, a third upper part that connects said first and second lateral parts at the top, and a fourth lower part that connects said first and second lateral parts at the bottom,
- a U-shaped reinforcement frame made of a metal sheet, open on the bottom:
   ∘ comprising three parts a first lateral part, a second lateral part, and a third upper part that connects said first and second lateral parts,
   ∘ it has a U-shaped section wherein the open face of said U corresponding to the first lateral part and the open face of the U corresponding to the second lateral part are opposite each other,
   ∘ wherein the thickness of the metal sheet forming said reinforcement frame is less than 1.5 mm,
- first joining means that lock the position of the ring with respect to the reinforcement frame in a mounting direction m for both elements.

Wherein said ring is fitted in the reinforcement frame such that the seat back-rest structure has several contacting sections in correspondence with the first, second and third parts of the reinforcement frame and in correspondence with the first, second and third parts of the ring, respectively, such that each contacting section comprises contacting areas formed by part of the surface of the ring arranged without clearance in correspondence with a part of the surface of the reinforcement frame, thereby allowing loads to be transmitted between said ring and said reinforcement frame,
and wherein the assembly formed by said ring and said reinforcement frame joined by the first joining means form a single structure that can withstand the loads to which the seat back-rest is subjected in the direction x of the vehicle.

The mounting direction m relates to the direction of threading of the ring in the reinforcement frame through its lower opening.

When the invention refers to said ring being fitted in the reinforcement frame, it shall be understood that the ring is inserted in said frame so that it is only possible to separate the two elements along the mounting direction m.

The term 'contacting areas' refers to the areas of the structure where there is an adjusting arrangement between the ring and the reinforcement frame that prevents relative motion between the two elements in directions perpendicular to said contacting areas, and by which it is possible to transmit loads from one element to the other, and thereby to cooperate in order to withstand said loads.

The adjusting arrangement between the ring and the reinforcement frame along the contacting sections can be performed either continuously or discontinuously, that is, there can be areas along the contacting sections without an adjusting arrangement between the ring and the reinforcement frame.

In addition, load transmission between the ring and the reinforcement frame can be performed either directly or indirectly. This is, the adjusting arrangement between the ring and the reinforcement frame is established either because at the contacting areas there is direct contact between the two elements, allowing a direct load transmission, or because at the contacting areas there is one or more intermediate elements between the ring and the reinforcement frame with an adjusting arrangement, without clearance, between all of them, so that it is also possible to transmit loads between the ring and the reinforcement frame in an indirect manner through said intermediate element.

The vehicle direction x refers to the direction of motion of said vehicle.

A structure able to withstand the typical loads to which the back-rest is subjected in the vehicle direction x is understood as a structure that can withstand both the loads resulting from the normal use of the back-rest when a user uses the seat and those resulting from a frontal or rear collision of the vehicle.

The main feature of the back-rest structure of the invention is its simplicity.

Firstly, the back-rest structure is simple in that it only comprises two main elements, the ring and the reinforcement frame, joined by some joining means.

The simplicity of the structure results in a very simple mounting process as regards the operations to carry out and the time required for them.

In addition, said main elements have a simple shape such that if they operated individually they would not be able to withstand the typical loads on a seat back-rest. This is, these main elements are not structural elements when considered separately.

This simple shape of both the ring and the reinforcement frame allows following simple manufacturing processes for said elements.

On another hand, the special shape of the elements that form the structure by which one element fits in the other along the mounting direction m such that it is impossible to separate these elements along a direction other than said mounting direction m, allows using simple joining means as regards their complexity and number.

The use of a plastic element, the ring, as part of the back-rest structure allows integrating components in said plastic part, so that it is possible to maintain a simplified structure where, in addition to maintaining the typical functionalities of a common seat back-rest, it is possible to incorporate additional ones.

Thus, on one hand the number of components is reduced without losing functionalities and on the other it is possible to add functions without adding components.

As a result of the simplicity of the structure constituting the back-rest structure of the invention as defined above, it is possible to optimise the use of materials and reduce the cost of the process and the design, therefore significantly reducing the cost of said structure.

Said simplification of the structure is obtained while maintaining its reliability, good mechanical performance and light weight.

The reliability of the structure in this case is provided by, in addition to the above-cited components, the use of a robust and simple joining method based on the fit of the ring and the reinforcement frame, together with the use of simple joining means that avoid the need for welded unions which would affect the reliability of the structure.

In addition, the back-rest structure of the invention provides a good mechanical performance in the presence of loads along the direction x of the vehicle, due to the specific configuration of the back-rest structure in which the ring is retained by the reinforcement frame in the direction x of the vehicle.

Said specific configuration comprises an adjusting union of the main elements forming the structure, where the open side of the U-shaped section of the second lateral part and the open side of the U-shaped section of the second lateral part are opposite each other such that the ring is retained in the reinforcement frame.

On another hand, the simplicity of the back-rest structure as regards its component elements also allows a lightweight configuration of the seat back-rest structure.

### DESCRIPTION OF THE DRAWINGS

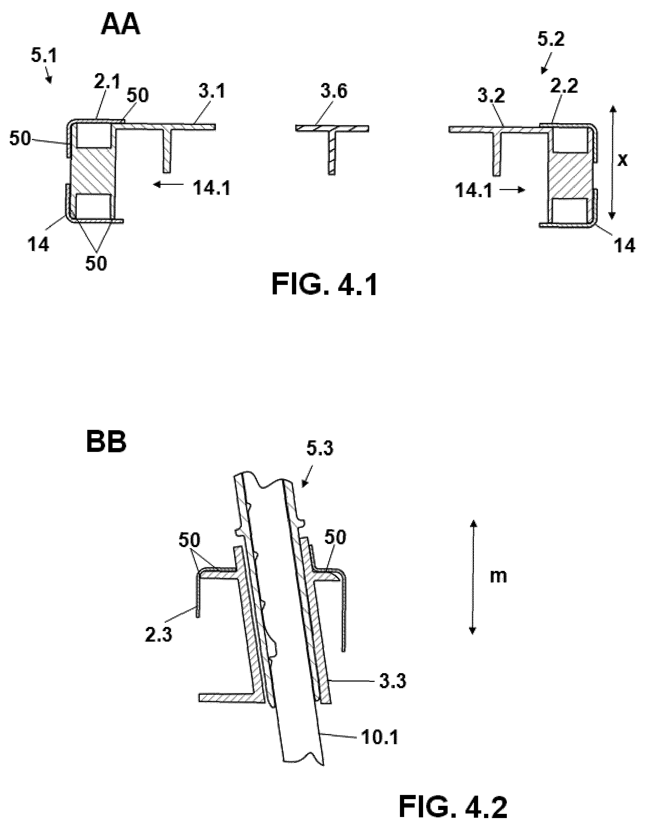

This specification is supplemented with a set of drawings illustrating the preferred embodiment, which are never intended to limit the invention.
Figure 1 shows a perspective view of the seat back-rest of the invention attached to a seat base.
Figure 2 shows an exploded view of the seat back-rest of the invention in its most basic configuration.
Figure 3 shows an elevation view of the seat back-rest structure of the invention indicating the position of several cross sections of different parts forming the seat back-rest structure:
   - Cross-section AA corresponds to the first and second contacting sections of the seat back-rest structure, and section BB corresponds to the third contacting section of the seat back-rest structure, showing the contacting areas corresponding to the various contacting sections of the seat back-rest structure. Said sections AA and BB are represented in figures 4.1 and 4.2,
   - Cross-sections CC, DD, EE and FF correspond to different areas of the second contacting section of the seat back-rest structure, showing some examples of the different joining means represented in figures 5.1-5.19.

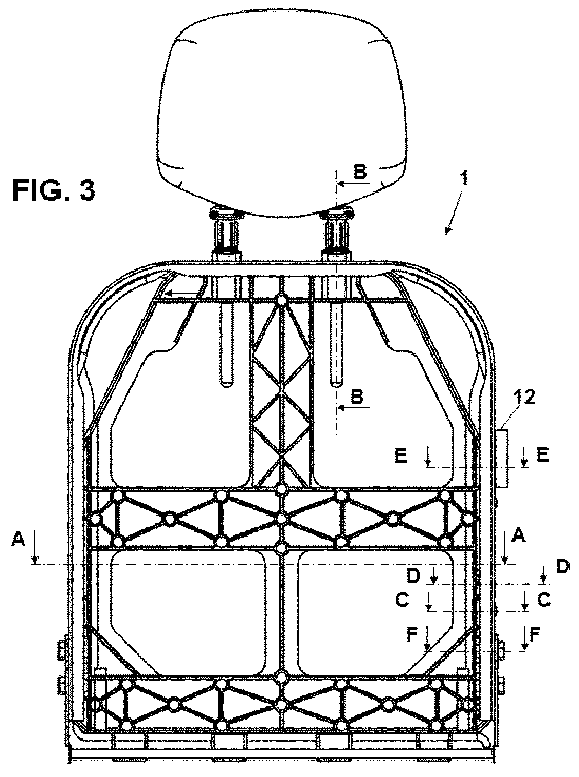

Figure 4.1 shows a view of cross-section AA represented in figure 3 of the first and second contacting sections of the seat back-rest structure, showing the contacting areas corresponding to said first and second contacting sections.
Figure 4.2 shows a view of cross-section BB represented in figure 3 of the third contacting section of the seat back-rest structure, showing the contacting areas corresponding to said third contacting section.
Figures 5.1-5.19 show views of cross-sections CC, DD, EE and FF represented in figure 3 of the second contacting section of the seat back-rest structure, showing some examples of the joining means used to configure the seat back-rest structure of the invention according to its simplest configuration, or other configurations in which optional components have been added.
   Specifically, figures 5.1-5.3 represent three variants corresponding to cross-section CC represented in figure 3, showing the first joining means that connect the reinforcement frame to the ring in order to form the seat back-rest structure.
   Figures 5.4-5.7 represent four variants corresponding to cross-section DD represented in figure 3, showing the second joining means that connect the seat back-rest structure and the reinforcement areas by the second joining means, according to a variant of the invention wherein said reinforcement areas are configured by using additional reinforcement elements.
   Figures 5.8-5.15 represent eight variants corresponding to cross-section EE represented in figure 3, showing the third joining means that connect a functional component to the seat back-rest structure.

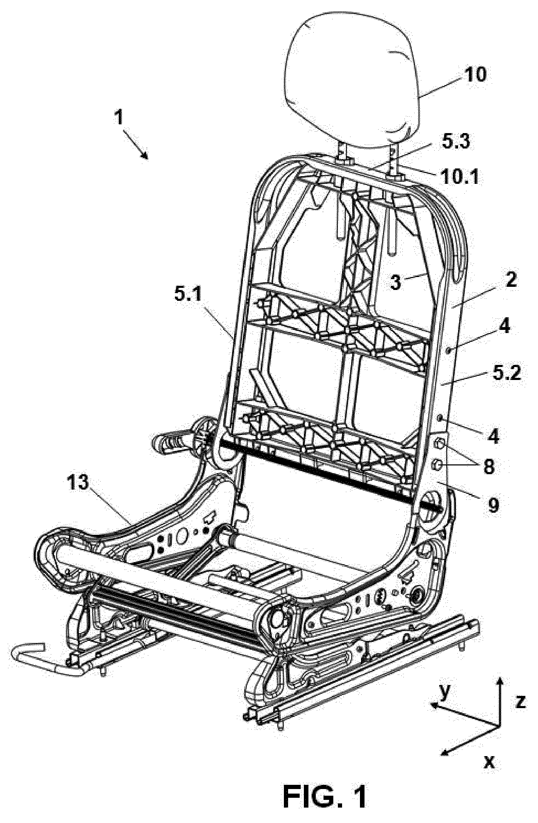

   Figures 5.16-5.19 represent four variants corresponding to cross-section FF represented in figure 3, showing the fourth joining means that connect the seat back-rest structure to a seat base represented in figure 1, through some connection sheets.

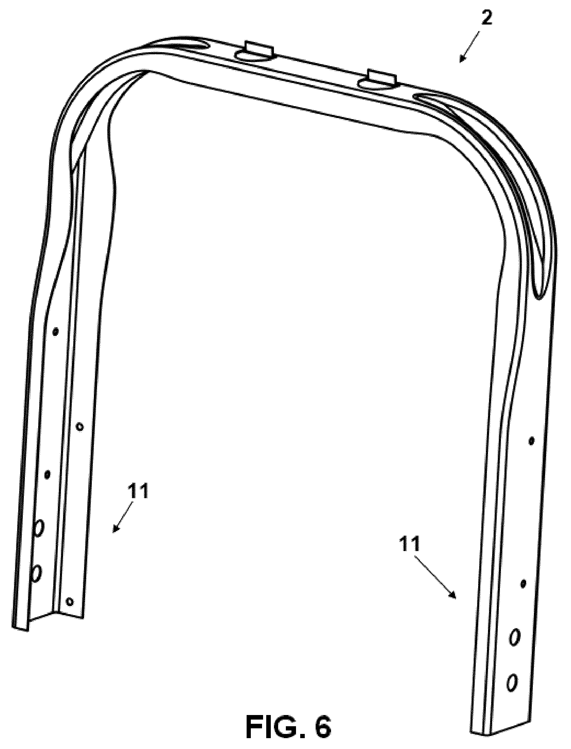

Figure 6 represents a perspective view of the reinforcement frame according to an alternative embodiment of the invention to that shown in figures 1, 2 and 3, wherein the reinforcement frame is configured with a variable section profile.

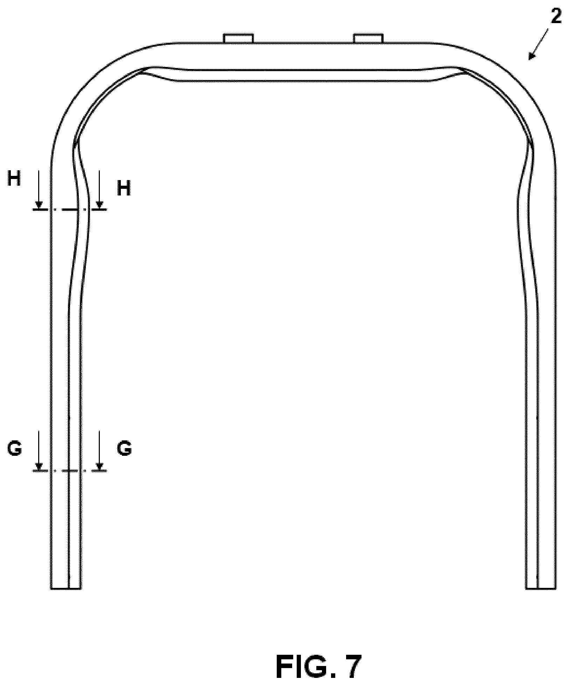

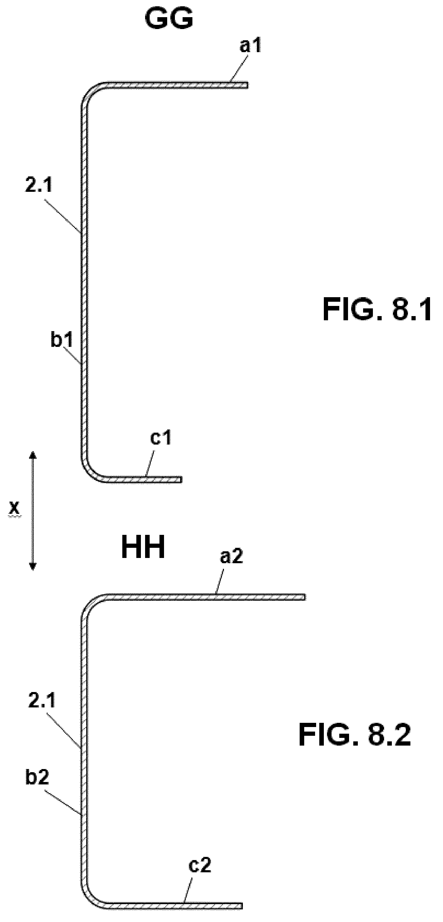

Figure 7 represents an elevation view of the reinforcement frame according to the configuration represented in figure 6, indicating two cross-sections of the first part of the reinforcement frame, where cross-section GG represents a reinforcement frame area located near the area where it will be joined to the remaining elements configuring a vehicle seat and cross-section HH represents a non-reinforced area of the frame farther from said joining area; said cross-sections GG and HH are represented in figures 8.1 and 8.2 respectively.
Figures 8.1 and 8.2 represent respectively cross-sections GG and HH indicated in figure 7.

### DETAILED DESCRIPTION OF THE INVENTION

As can be seen in figure 1, the seat back-rest structure (1) comprises a ring (3) of plastic material and a U-shaped reinforcement frame (2) made of a metal sheet open on its bottom with an also U-shaped cross-section, joined by first joining means (4).

The reinforcement frame (2) comprises three parts, a first lateral part (2.1) and a second lateral part (2.2), normally vertical, and a third upper part (2.3), normally horizontal, which connects said first and second lateral parts (2.1 2.2), and a bottom opening; this is, the reinforcement frame (2) is open on the bottom.

Similarly, the U-shaped section (14) of the reinforcement frame (2) comprises three parts that generate a cavity accessible through the open side (14.1) of the U-shaped section (14).

The open side (14.1) of the U-shaped section (14) corresponding to the first lateral part (2.1) of the reinforcement frame (2) and the open side (14.1) of the U-shaped section (14) corresponding to the second lateral part (2.2) of the reinforcement frame (2) are opposite each other.

The open side (14.1) of the U-shaped section (14) of the third upper part (2.3) faces the bottom opening of the reinforcement frame (2) along a mounting direction m of the ring (3) in the reinforcement frame (2).

On another hand, the ring (3) has four parts, a first lateral part (3.1) and a second lateral part (3.2), normally vertical, a third upper part (3.3) that connects said first and second lateral parts (3.1, 3.2) at the top and a fourth lower part (3.4) that connects said first and second lateral parts (3.1, 3.2) on the bottom, wherein said second and third respectively upper and lower parts (3.3, 3.4) are normally horizontal.

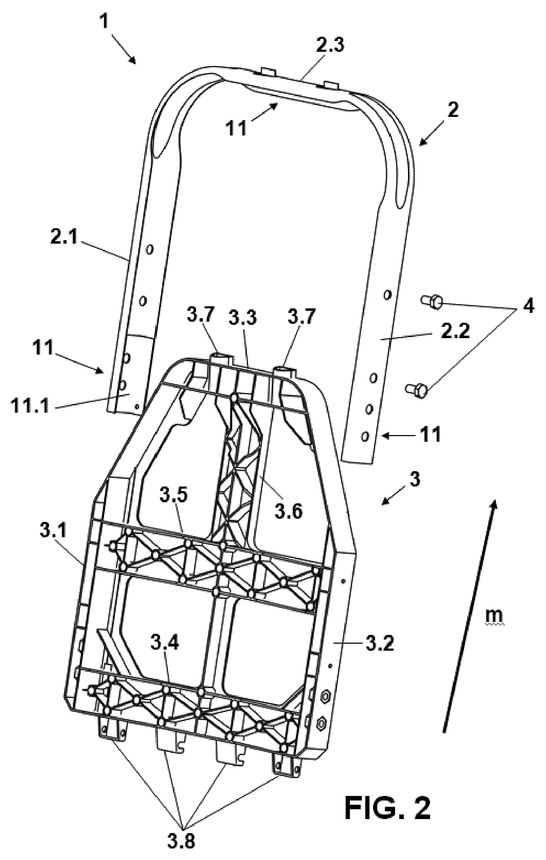

This special configuration of the reinforcement frame (2) and the ring (3), as shown in figure 2, allows fitting the ring (3) in the reinforcement frame (2) along a mounting direction m corresponding to the threading direction of the ring (3) in the reinforcement frame (2) through its lower opening, until the third upper part (3.3) of the ring (3) meets the third upper part (2.3) of the reinforcement frame (2).

After fitting the ring (3) in the reinforcement frame (2), some contacting sections (5) are defined between the two elements, each of which in turn comprises some contacting areas (50), specifically a first contacting section (5.1) defined in correspondence with the first lateral part (2.1) of the reinforcement frame (2) and the first lateral part (3.1) of the ring (3), a second contacting section (5.2) defined in correspondence with the second lateral part (2.2) of the reinforcement frame (2) and the second lateral part (3.2) of the ring (3), and a third contacting section (5.3) defined in correspondence with the third upper part (2.3) of the reinforcement frame (2) and the third upper part (3.3) of the ring (3).

The first contacting section (5.1) preferably extends from the free end of said first lateral part (2.1) of the reinforcement frame (2) and encompasses at least the joining area of the reinforcement frame (2) and the ring (3) through the first joining means (4).

Similarly, the second contacting section (5.2) preferably extends from the free end of said second lateral part (2.2) of the reinforcement frame (2) and encompasses at least the joining area of the reinforcement frame (2) and the ring (3) through the first joining means (4).

The third contacting section (5.3) is preferably located in correspondence with the attachment area of the seat headrest (10).

The contacting areas (50), shown in figures 4.1 and 4.2, are formed by a part of the surface of the ring (3) located without clearance in correspondence with a part of the surface of the reinforcement frame (2), so that there is a transmission of loads between said ring (3) and said reinforcement frame (2).

Therefore, in said contacting areas (50) there is an adjusting arrangement between the ring (3) and the reinforcement frame (2).

This adjusting arrangement prevents the relative motion of the ring (3) with respect to the reinforcement frame (2) along the directions perpendicular to said contacting areas (50) where the adjusting arrangement is established between the two elements (2, 3) located in the contacting sections (5), which allows transmission of loads between the ring (3) and the reinforcement frame (2).

In the variants shown for example in figures 4.1 and 4.2, the ring (3) and the reinforcement frame (2) are directly in contact in the contacting areas (50), so that the transmission of loads between the two elements (2, 3) takes place directly.

However, the possibility is also considered that between the ring (3) and the reinforcement frame (2) other components of the back-rest have an adjusting arrangement in correspondence with the contacting areas (50), so that the transmission of loads between the two elements takes place indirectly.

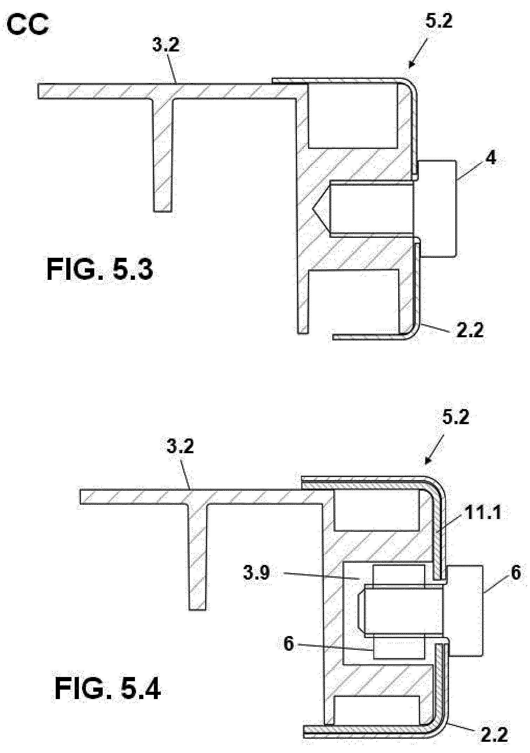

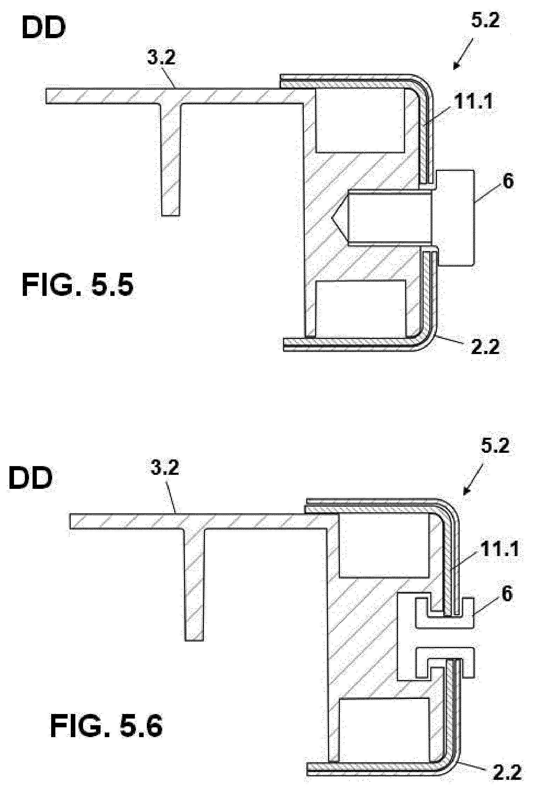

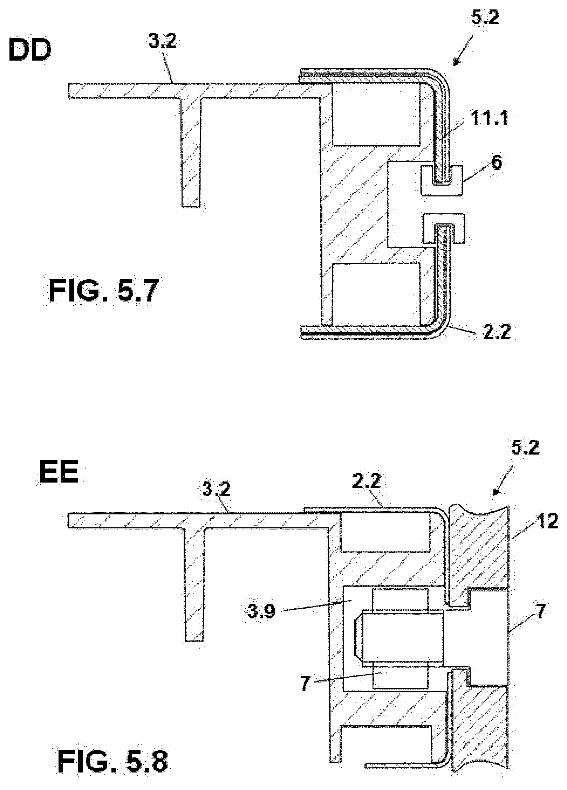

In these special cases shown in figures 5.4, 5.5, 5.6 and 5.7, there is an intermediate element such as an additional reinforcement element (11.1), between the ring (3) and the reinforcement frame (2), which forms part of the contacting areas (50) and ensures the adjusting arrangement of the ring (3) and the reinforcement frame (2), thereby enabling loads to be transmitted between the two elements (2, 3) in an indirect manner.

In this way, the two elements (2, 3) behave as a single body, as regards their mechanical behaviour, making the seat back-rest structure (1) a structure that can withstand the loads to which the seat back-rest is subjected in the direction x of the vehicle, these loads being greater than those that each component (2, 3) would withstand separately.

In order to simplify the description of the invention, the present description focusses on the loads generated in the direction x of the vehicle, as these are considered to be those harder to absorb by the seat back-rest structure (1) in view of the known prior art. However, the seat back-rest structure (1) of the invention can also absorb the loads generated in the other directions.

The first joining means (4) are in charge of locking the position of the ring (3) with respect to the reinforcement frame (2) in the mounting direction m of the two elements (2, 3), particularly during the transport, handling and mounting operations, as in these operations the adjusting arrangement of the two elements (2, 3) established through the contacting areas (50) may not be enough to prevent the motion of one element with respect to the other.

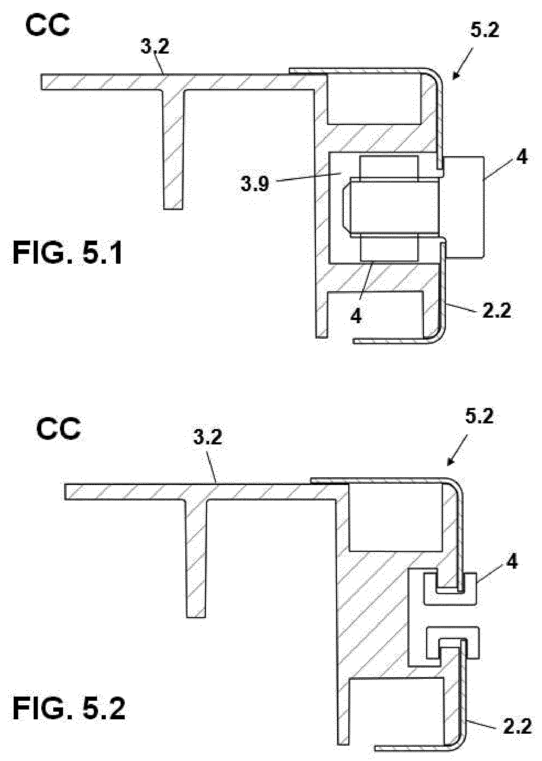

As shown in figures 5.1, 5.2 and 5.3, said first joining means (4) can comprise for example screws and nuts, self-threading screws or rivets.

Specifically, figure 5.1 shows a screwed joining of the reinforcement frame (2) on the ring (3) by using a screw threaded in a nut that is housed and retained in a housing (3.9) located in the ring (3).

Figure 5.2 shows a riveted joining of the reinforcement frame (2) on the ring (3) by using a rivet.

Figure 5.3 shows a screwed joining of the reinforcement frame (2) on the ring (3) with a self-threading screw that threads directly in the ring (3) made of plastic material.

On another hand, the seat back-rest structure (1) can also comprise reinforced areas (11) along the same, particularly in areas with a greater concentration of loads, such as in the areas of same located in correspondence with the bottom areas of the first and second parts (5.1, 5.2) that contact it, where it will be joined to the remaining elements that configure a vehicle automobile seat, and in the contacting section (5.3) where the headrest (10) is joined.

On one hand, said reinforced areas (11) can be obtained with the reinforcement frame (2) as shown in figures 6, 7, 8.1 and 8.2, changing the shape of said reinforcement frame (2) by a gradual adjustment of its cross section, this is, changing the moment of inertia of this section to support the various maximum loads produced along its length.

In this way, the reinforcement frame (2) comprises areas with a section that has a greater moment of inertia depending on the direction of the maximum loads that it must withstand.

Said areas correspond to the reinforced areas (11) of said reinforcement frame (2) where the load concentration is greatest, in order to withstand said loads.

Specifically, in the example shown in figures 8.1 and 8.2 two sections are shown of the first part (2.1) of the reinforcement frame: section GG located in a position near the bottom of the first part (2.1) of the reinforcement frame (2), where the back-rest structure (1) is joined to the remaining elements of the automobile vehicle and where the maximum loads of the seat back-rest structure (1) are concentrated in the direction x; and section HH at a position more distant from said union area.

A comparison of said sections GG and HH reveals that the section of the reinforcement frame (2) varies along its length depending on structural needs.

Said section of the reinforcement frame (2) varies, maintaining a constant total length of its perimeter along the length of the reinforcement frame (2) such that the sum of the lengths of the segments a1, b1 and c1 that form the perimeter of section GG is equal to the sum of the lengths of the segments a2, b2 and c2 that form the perimeter of section HH.

In this specific case, where the maximum loads are concentrated in direction x, section GG presents in said direction x a segment b1 that has a greater length than that of segment b2 of section HH, where the loads in direction x are not so critical for this area of the seat back-rest structure (1) more distant from the union area.

This allows increasing the moments of inertia of the sections in each section (2.1, 2.2, 2.3) of the reinforcement frame (2) in a localised manner, and thereby its strength, as a function of the direction of the most important loads in each case in order to withstand said loads.

In this case, the reinforcement frame (2) is obtained from a profiling process with a variable section that is particularly advantageous due to its simplicity.

On another hand, said reinforced areas (11) can also be obtained by incorporating additional reinforcement elements (11.1) on the seat back-rest structure (1) at the areas with greater demands, as shown in figures 1, 2 and 3 and in greater detail in the sections represented in figures 5.4, 5.5, 5.6 and 5.7.

The arrangement of these additional reinforcement elements (11.1) can be performed by total or partial superposition of these on the reinforcement frame (2).

Similarly, the arrangement of the additional reinforcement elements (11.1) can be established between the reinforcement frame (2) and the ring (3), as shown in figures 5.4, 5.5, 5.6 and 5.7 or according to a configuration not shown in the figures, wherein the additional elements are arranged in contact with the outer surface of the reinforcement frame (2).

Said additional reinforcement elements (11.1) are connected to the seat back-rest structure (1) by second joining means (6) that can comprise for example screws with nuts, self-threading screws or rivets, as shown in the enlarged inset of figures 5.4, 5.5, 5.6 and 5.7.

Specifically, figure 5.4 shows a screwed joining of the additional reinforcement element (11.1) on the ring (3) by using a screw threaded in a nut that is housed and retained in a housing (3.9) located in the ring (3).

Figure 5.5 shows a screwed joining of the additional reinforcement element (11.1) on the ring (3) with a self-threading screw that threads directly in the ring (3) made of plastic material.

Figure 5.6 shows a riveted joining of the additional reinforcement element (11.1) on the ring (3) by using a rivet.

Finally, figure 5.7 shows a riveted joining of the additional reinforcement element (11.1) on the reinforcement frame (2) by using a rivet.

The reinforcement frame (2) is configured by a metal sheet with a thickness in all cases under 1.5 millimetres, which can be made of steel or other light alloys.

The small thickness of the metal sheet used to make the reinforcement frame (2), together with the shape described above, define an element without structural capabilities by itself, considering that its field of application is that of seat back-rest structures.

Therefore, the use of a reinforcement frame (2) with these characteristics by itself would not be valid for the application of the seat back-rest structure (1) of the invention.

As regards the other element defined that forms the seat back-rest structure (1) of the invention, it comprises a ring (3) made of plastic material that can have a ribbed configuration along the full length of said ring (3) or in localised areas thereof.

The geometrical configuration of the ring (3) can be any configuration that ensures an adjusting arrangement between the ring (3) and the reinforcement frame (2) in the contacting areas (50) located in the contacting sections (5) defined.

Said ring (3) can also include reinforcement beams in specific areas, also in response to structural needs.

Specifically, the ring (3) can comprise a first reinforcement beam (3.5) in an approximately central area of the ring (3) that connects the first lateral part (3.1) of the ring (3) to the second lateral part (3.2) of the ring (3), in order to reinforce the joining area of the back-rest to the seat base (13).

Said first reinforcement beam (3.5), in addition to its main function of reinforcing the seat back-rest structure (1), can also fulfill other functions such as a lumbar support for the seat by itself or complementary functions for the protection barrier function for the occupant's back against impacts from objects located behind the seat.

The ring (3) can also comprise a second reinforcement beam (3.6) in an approximately central area of the ring (3) that connects the third upper part (3.3) of the ring (3) to the fourth lower part (3.4) of the ring (3), in order to reinforce the area of the headrest (10).

In addition, the ring (3) can incorporate other elements as an integral part of its structure, that is, forming a single body, in order to add functionalities to the seat back-rest structure (1) without the need to use additional elements therefor.

For example, the ring (3) can incorporate in an integral manner in its third upper part (3.3) a housing (3.7) for the guiding means (10.1) of the headrest (10), such as rods as those shown in figure 1.

Another example is the integration of the housing (3.8) for the back-rest automatic returning means in the fourth part (3.4) of the ring (3).

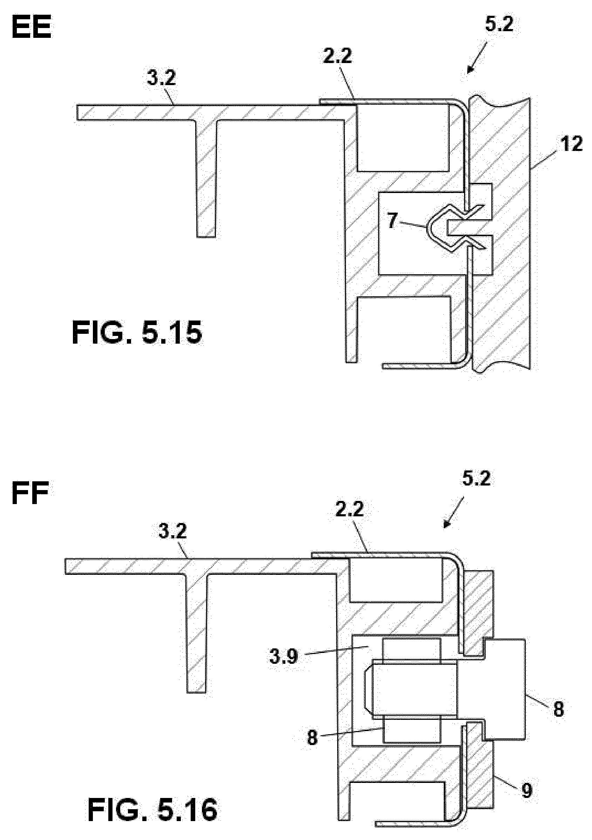

In addition, the ring (3) can incorporate as an integral part different configurations for housing the various joining means (4, 6, 7, 8) present in the seat back-rest structure (1) of the invention, as shown in figures 5.1, 5.4, 5.8 and 5.16, wherein the ring (3) comprises housings (3.9) for attachment nuts.

On another hand, with the specific aim of allowing the seat back-rest to also act as a table, that is a function in which the back-rest is arranged horizontally to support various objects, the ring (3) can comprise a continuous cover (not shown) that connects the four parts (3.1, 3.2, 3.3, 3.4) of the ring (3) in a rear part thereof. Said cover is included as an integral part of the ring (3).

The plastic ring (3) can be made, for example, of polyamide, polypropylene with long or short reinforcement fibre, etc.

In addition, said ring (3) can be obtained for example by a process of injection or thermoforming.

The geometrical configuration described for the ring (3) defines an element without structural capability on its own for the field of application of seat back-rest structures. This is, the use of a ring (3) with the described characteristics operating alone would not be valid for application to seat back-rest structures.

Having defined the basic composition of the seat back-rest structure (1) of the invention, the possibility is described of adding functionalities to said structure by adding functional components (12) to it.

To simplify the representation of the figures, the functional components (12) have been represented in figure 3 in a schematic manner, as what is emphasised in the invention is the different ways of attaching said functional components (12) to the seat back-rest structure (1) of the invention.

Said functional components (12) can comprise for example an airbag, safety accessories for child seats, a lumbar support, a safety belt secured to the seat, access to rear seat actuation means, an armrest, wiring, decorative trims of various types.

Said functional components (12) are joined to said seat back-rest structure (1) by third joining means (7).

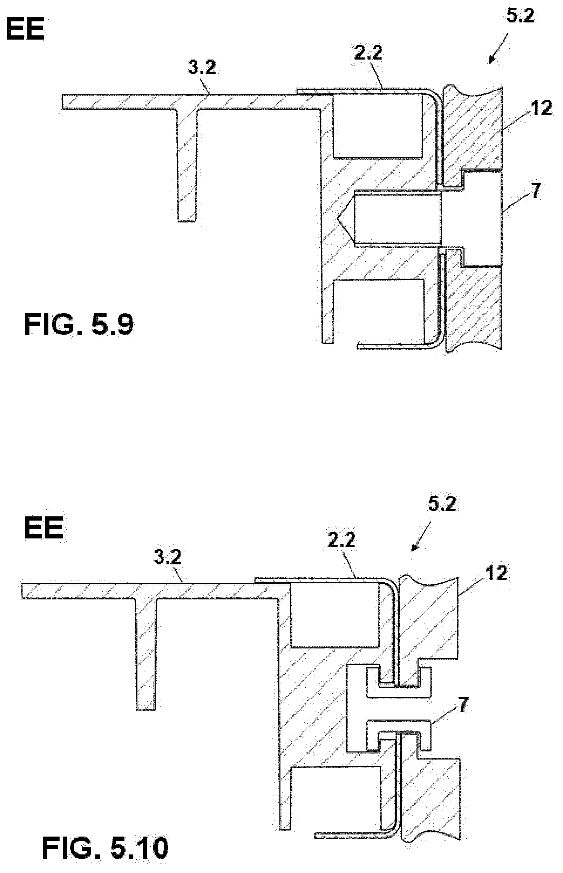

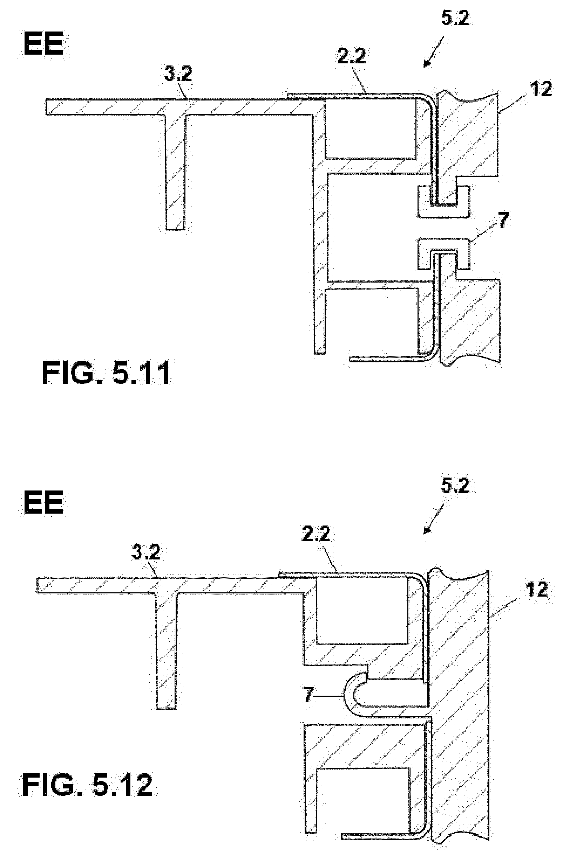

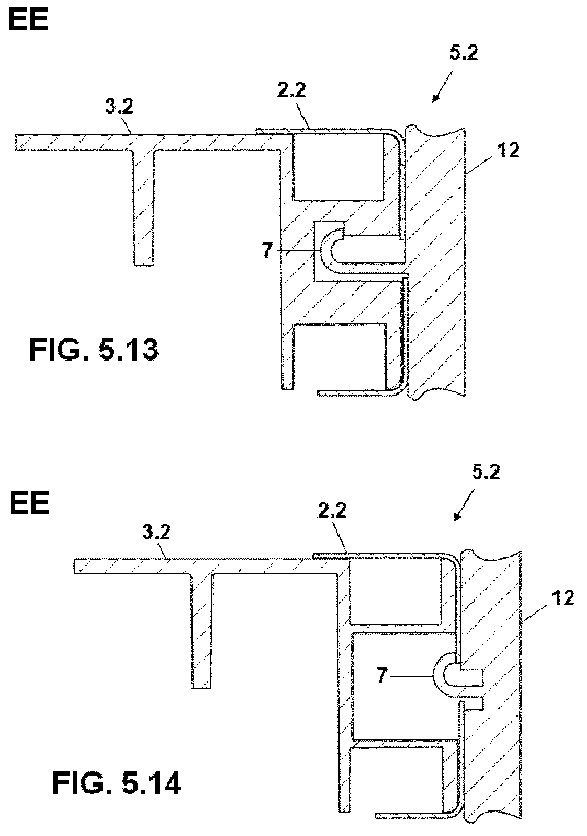

The third joining means (7), as shown in the enlarged insets represented in figures 5.8-5.15, can comprise for example clips, shown in figures 5.12, 5.13 and 5.14, rivets, shown in figures 5.10 and 5.11, self-threading screws, shown in figure 5.9, screws and nuts, shown in figure 5.8, or stables, shown in figure 5.15.

Specifically, figure 5.8 shows a screwed joining of the additional component (12) on the seat back-rest structure (1) by using a screw threaded in a nut that is housed and retained in a housing (3.9) located in the ring (3).

Figure 5.9 shows a screwed joining of the functional component (12) on the seat back-rest structure (1) with a self-threading screw that threads directly in the ring (3) made of plastic material.

Figure 5.10 shows a riveted joining of the functional component (12) on the seat back-rest structure (1) with a rivet joined to the ring (3).

Figure 5.11 shows a riveted joining of the functional component (12) on the seat back-rest structure (1) with a rivet joined to the reinforcement frame (2).

Figures 5.12, 5.13 and 5.14 show different joining means for the functional component (12) to the seat back-rest structure (1) by means of clips. In the example shown in figure 5.12, the clip is retained in the rear part of the ring (3), in the example shown in figure 5.13 the clip is retained in a housing provided in the ring (3) and in the example shown in figure 5.14 the clip is retained in the reinforcement frame (2).

Finally, figure 5.15 shows a stapled joining of the functional component (12) on the seat back-rest structure (1) with a staple that is retained in the reinforcement frame (2).

To configure a complete seat, the seat back-rest structure (1) of the invention comprises fourth joining means (8) to join the seat back-rest structure (1) to the structure of a seat base (13) represented in figure 1.

As shown in figure 1, said fourth joining means (8) connect some connection sheets (9) in the lower part of the seat back-rest structure (1) that act as connection elements between the back-rest and the seat base (13).

Said connection sheets (9) comprise a first area joined to the seat back-rest structure (1) by the fourth joining means (8) and a second area that is joined to the seat base (13).

The union of said second area to the seat base (13) can be fixed or articulated.

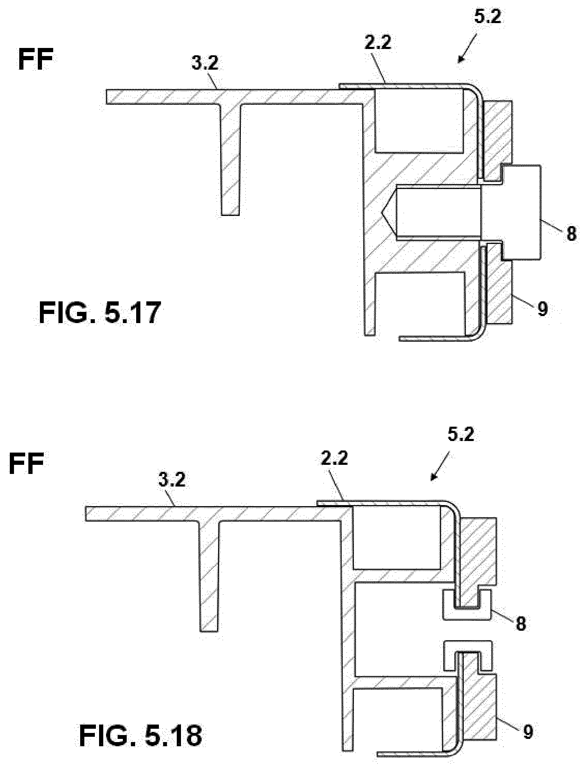

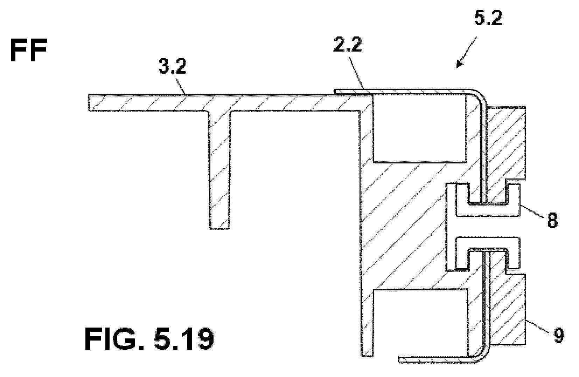

The fourth joining means (8) can comprise, for example, screws with nuts, self-threading screws, or rivets, as shown in the enlarged inset of figures 5.16, 5.17, 5.18 and 5.19.

Specifically, figure 5.16 shows a screwed joining of the connection sheets (9) to the ring (3) by using a screw threaded in a nut that is housed and retained in a housing (3.9) located in the ring (3).

Figure 5.17 shows a screwed joining of the connection sheets (9) to the ring (3) with a self-threading screw that threads directly in the ring (3) made of plastic material.

Figure 5.18 shows a riveted joining of the connection sheets (9) to the reinforcement frame (2) by using a rivet.

Finally, figure 5.19 shows a riveted joining of the connection sheets (9) to the ring (3) by using a rivet.

In a specific case, the different joining means (4, 6, 7, 8) defined throughout the description, and particularly the first joining means (4) for joining the ring (3) and the reinforcement frame (2), in order to form the seat back-rest structure (1), the second joining means (6) for joining the reinforcement elements (11.1) added to the seat back-rest structure (1), the third joining means (6) for joining the functional components (12) to the seat back-rest structure (1) and the fourth joining means (8) for joining the seat back-rest structure (1) to the seat base (13), can be used to perform more than one of the aforementioned joinings.

As an example of the various possible combinations, the first joining means (4) used to join the ring (3) and the reinforcement frame (2) can be used to join the reinforcement elements to the reinforcement frame (2).

## Claims

1. Back-rest structure for automobile vehicle seat comprising:
• A plastic ring (3)
∘ comprising four parts, a first lateral part (3.1), a second lateral part (3.2), a third upper part (3.3) that connects said first and second lateral parts (3.1, 3.2) at the top, and a fourth lower part (3.4) that connects said first and second lateral parts (3.1, 3.2) at the bottom,
• A U-shaped reinforcement frame (2) made of a metal sheet, open on the bottom:
∘ that comprises three parts a first lateral part (2.1), a second lateral part (2.2), and a third upper part (2.3) that connects said first and second lateral parts (2.1, 2.2),
∘ has a U-shaped section (14) wherein the open face (14.1) of said U-shaped section (14) corresponding to the first lateral part (2.1) and the open face (14.1) of the U-shaped section (14) corresponding to the second lateral part (2.2) are opposite each other,
∘ wherein the thickness of the metal sheet forming said reinforcement frame (2) is less than 1.5 mm,
• first joining means (4) that lock the position of the ring (3) with respect to the reinforcement frame (2) in a mounting direction m for both elements,
wherein said ring (3) is fitted in the reinforcement frame (2) such that the seat back-rest structure (1) has several contacting sections (5) in correspondence with the first, second and third parts (2.1, 2.2, 2.3) of the reinforcement frame (2) and in correspondence with the first, second and third parts (3.1, 3.2, 3.3) of the ring (3), respectively, such that each contacting section (5) comprises contacting areas (50) formed by part of the surface of the ring (3) arranged without clearance in correspondence with a part of the surface of the reinforcement frame (2), thereby allowing loads to be transmitted between said ring (3) and said reinforcement frame (2),
and wherein the assembly formed by said ring and said reinforcement frame (2) joined by the first joining means (4) form a single structure (1) that can withstand the loads to which the seat back-rest is subjected in the direction x of the vehicle.

2. Back-rest structure for automobile vehicle seat according to claim 1, wherein the seat back-rest structure (1) comprises reinforced areas (11).

3. Back-rest structure for automobile vehicle seat according to claim 2, wherein the reinforced areas (11) comprise areas of the reinforcement frame (2) with a section having a greater moment of inertia, so that the reinforcement frame (2) has a variable section along its length.

4. Back-rest structure for automobile vehicle seat according to claim 2, wherein the reinforced areas (11) comprise additional reinforcement elements (11.1) in the seat back-rest structure (1), where said additional reinforcement elements (11.1) are superimposed totally or partially on the reinforcement frame (2).

5. Back-rest structure for automobile vehicle seat according to claim 4, wherein the additional elements are joined to the seat back-rest structure (1) by second joining means (6).

6. Back-rest structure for automobile vehicle seat according to claim 1, wherein the ring (3) comprises a first reinforcement beam that connects the first lateral part (3.1) of the ring (3) to the second lateral part (3.2) of the ring (3) and/or a second reinforcement beam (3.6) that connects the third upper part (3.3) of the ring (3) to the fourth lower part (3.4) of the ring (3).

7. Back-rest structure for automobile vehicle seat according to claim 1, wherein the ring integrates the housing (3.7) for the headrest guiding means (10.1).

8. Back-rest structure for automobile vehicle seat according to claim 1, wherein the ring integrates the housing (3.8) for the back-rest automatic returning means.

9. Back-rest structure for automobile vehicle seat according to claim 1, which additionally comprises functional components (12) joined to said seat back-rest structure (1) by third joining means (7).

10. Back-rest structure for automobile vehicle seat according to claim 9, wherein the functional components (12) comprise an airbag, safety accessories for child seats, a lumbar support, a safety belt secured to the seat, access to rear seat actuation means, an armrest, wiring, or decorative trims of various types.

11. Back-rest structure for automobile vehicle seat according to claim 1, which additionally comprises fourth joining means (8) for joining to a seat base (13).

12. Back-rest structure for automobile vehicle seat according to claim 11, wherein the union is established by connection sheets (9).

13. Back-rest structure for automobile vehicle seat according to claim 1, wherein the first joining means (4) comprise a screwed joining of the reinforcement frame (2) on the ring (3) by using a screw threaded in a nut that is housed and retained in a housing (3.9) located in the ring (3).

14. Back-rest structure for automobile vehicle seat according to claim 1, wherein the first joining means (4) comprise a riveted joining of the reinforcement frame (2) on the ring (3) by using a rivet.

15. Back-rest structure for automobile vehicle seat according to claim 1, wherein the first joining means (4) comprise a threaded joining of the reinforcement frame (2) on the ring (3) by using a self-threaded screw that is screwed directly on the plastic ring (3).

## Patentansprüche

1. Rückenlehnenstruktur für Automobilsitz mit
• Einem Kunststoffring (3),
o der sich aus vier Teilen zusammensetzt, nämlich aus einem ersten (3.1) und einem zweiten (3.2) Seitenteil, einem dritten oberen Teil (3.3), welches das besagte erste und zweite Seitenteil (3.1, 3.2) oben miteinander verbindet, und einem vierten unteren Teil, welches das besagte erste und zweite Seitenteil (3.1, 3.2) unten miteinander verbindet,
• Einem U-förmigen Verstärkungsrahmen (2), der aus einer unten offenen Metallplatte gefertigt ist,
o wobei dieser Rahmen sich aus drei Teilen zusammensetzt, nämlich aus einem ersten (2.1) und einem zweiten (2.2) Seitenteil sowie einem dritten oberen Teil (2.3), welches das besagte erste und zweite Seitenteil (2.1, 2.2) miteinander verbindet,
∘ und einen U-förmigen Abschnitt (14) besitzt, dessen offene Seiten (14.1), die jeweils dem ersten und dem zweiten Seitenteil (2.1, 2.2) des U-förmigen Abschnitts (14) entsprechen, einander gegenüberliegen,
∘ wobei die Metallplatte, die den genannten Verstärkungsrahmen (2) bildet, dünner ist als 1,5 mm,
• Ersten Verbindungsmitteln (4), welche die Position des Rings (3) bezüglich des Verstärkungsrahmens (2) für beide Elemente in einer Montagerichtung m verriegeln,
wobei der besagte Ring (3) derart in den Verstärkungsrahmen (2) eingefügt ist, dass die Rückenlehnenstruktur (1) des Sitzes mehrere Kontaktbereiche (5) aufweist, sowohl entsprechend dem ersten, zweiten und dritten Teil (2.1, 2.2, 2.3) des Verstärkungsrahmens (2) als auch entsprechend dem ersten, zweiten und dritten Teil (3.1, 3.2, 3.3) des Rings (3), dergestalt, dass jeder Kontaktbereich (5) Kontaktflächen (50) besitzt, die von einer Teiloberfläche des Rings (3) gebildet werden und ohne Freiraum entsprechend einer Teiloberfläche des Verstärkungsrahmens (2) angeordnet sind, was die Übertragung von Belastungen zwischen dem besagten Ring (3) und dem genannten Verstärkungsrahmen (2) ermöglicht,
wobei die aus dem besagten Ring und dem genannten Verstärkungsrahmen (2) bestehende Baugruppe zusammen mit den ersten Verbindungsmitteln (4) eine einzige Struktur (1) bildet, die den Belastungen widersteht, welche in X-Richtung des Fahrzeugs auf die Sitzrückenlehnen einwirken.

2. Rückenlehnenstruktur für Automobilsitz gemäß Anspruch 1, wobei die Rückenlehnenstruktur (1) des Sitzes verstärkte Abschnitte (11) umfasst.

3. Rückenlehnenstruktur für Automobilsitz gemäß Anspruch 2, wobei die verstärkten Abschnitte (11) bestimmte Abschnitte des Verstärkungsrahmens (2) umfassen, die Querschnittsflächen mit größerem Trägheitsmoment besitzen, sodass die Querschnittsfläche des Verstärkungsrahmens (2) entlang seiner Länge variiert.

4. Rückenlehnenstruktur für Automobilsitz gemäß Anspruch 2, wobei die verstärkten Abschnitte (11) in der Rückenlehnenstruktur (1) des Sitzes zusätzliche Verstärkungselemente (11.1) umfassen, die den Verstärkungsrahmen (2) teilweise oder gänzlich überlagern.

5. Rückenlehnenstruktur für Automobilsitz gemäß Anspruch 4, wobei die zusätzlichen Elemente mithilfe zweiter Verbindungsmittel (6) an der Rückenlehnenstruktur (1) des Sitzes befestigt sind.

6. Rückenlehnenstruktur für Automobilsitz gemäß Anspruch 1, wobei der Ring (3) einen ersten Verstärkungsbalken umfasst, der den ersten (3.1) und den zweiten (3.2) seitlichen Teil des Rings (3) miteinander verbindet, und/oder einen zweiten Verstärkungsbalken (3.6), der den dritten oberen Teil (3.3) und den vierten unteren Teil (3.4) des Rings (3) miteinander verbindet.

7. Rückenlehnenstruktur für Automobilsitz gemäß Anspruch 1, wobei das Gehäuse (3.7) der Führungsmittel (10.1) der Kopfstütze in den Ring eingebaut ist.

8. Rückenlehnenstruktur für Automobilsitz gemäß Anspruch 1, wobei das Gehäuse (3.8) der automatischen Rückstellungsmittel der Rückenlehne in den Ring eingebaut ist.

9. Rückenlehnenstruktur für Automobilsitz gemäß Anspruch 1, die zusätzliche funktionelle Komponenten (12) umfasst, welche mithilfe dritter Verbindungsmittel (7) an der Rückenlehnenstruktur (1) des Sitzes befestigt sind.

10. Rückenlehnenstruktur für Automobilsitz gemäß Anspruch 9, wobei die funktionellen Komponenten (12) einen Airbag, Sicherheitszubehör für Kindersitze, eine Lendenstütze, einen am Sitz befestigten Sicherheitsgurt, Betätigungsmittel für den Zugang zu den Rücksitzen, eine Armstütze, Verkabelung oder dekorative Verkleidungen unterschiedlicher Art umfassen.

11. Rückenlehnenstruktur für Automobilsitz gemäß Anspruch 1, die zusätzliche vierte Verbindungsmittel (8) umfasst, die zur Befestigung an einer Sitz-Bodenhalterung (13) dienen.

12. Rückenlehnenstruktur für Automobilsitz gemäß Anspruch 11, wobei Verbindungsplatten (9) diese Befestigung herstellen.

13. Rückenlehnenstruktur für Automobilsitz gemäß Anspruch 1, wobei die ersten Verbindungsmittel (4) eine geschraubte Befestigung des Verstärkungsrahmens (2) am Ring (3) umfassen, in der eine Schraube in eine Schraubenmutter eingedreht wird, welche in einem Gehäuse (3.9) untergebracht und gelagert ist, das sich im Ring (3) befindet.

14. Rückenlehnenstruktur für Automobilsitz gemäß Anspruch 1, wobei die ersten Verbindungsmittel (4) eine genietete Befestigung des Verstärkungsrahmens (2) am Ring (3) mithilfe einer Niete umfassen.

15. Rückenlehnenstruktur für Automobilsitz gemäß Anspruch 1, wobei die ersten Verbindungsmittel (4) eine Gewindebefestigung des Verstärkungsrahmens (2) am Ring (3) umfassen, in der eine selbstschneidendexxx Schraube direkt in den Kunststoffring (3) eingedreht wird.

## Revendications

1. Structure de dossier pour siège de véhicule automobile comprenant :
• une bague de plastique (3)
o comprenant quatre parties, une première partie latérale (3.1), une deuxième partie latérale (3.2), une troisième partie supérieure (3.3) qui relie lesdites première et deuxième parties latérales (3.1, 3.2) au niveau du dessus et une quatrième partie inférieure (3.4) qui relie lesdites première et deuxième parties latérales (3.1, 3.2) au niveau du fond,
• un cadre de renfort en forme de U (2) composé d'une feuille métallique, ouvert sur le fond :
∘ qui comprend trois parties, une première partie latérale (2.1), une deuxième partie latérale (2.2) et une troisième partie supérieure (2.3) qui relie lesdites première et deuxième parties latérales (2.1, 2.2),
∘ présente une section en forme de U (14) dans laquelle la face ouverte (14.1) de ladite section en forme de U (14) correspondant à la première partie latérale (2.1) et la face ouverte (14.1) de la section en forme de U (14) correspondant à la deuxième partie latérale (2.2) sont opposées l'une à l'autre,
∘ dans laquelle l'épaisseur de la feuille métallique formant ledit cadre de renfort (2) est inférieure à 1,5 mm,
• un premier moyen de jonction (4) qui verrouille la position de la bague (3) par rapport au cadre de renfort (2) dans une direction de montage m pour les deux éléments,
dans laquelle ladite bague (3) est ajustée dans le cadre de renfort (2) de telle sorte que la structure de dossier de siège (1) possède plusieurs sections de contact (5) en correspondance avec les première, deuxième et troisième parties (2.1, 2.2, 2.3) du cadre de renfort (2) et en correspondance avec les première, deuxième et troisième parties (3.1, 3.2, 3.3) de la bague (3), respectivement, de sorte que chaque section de contact (5) comprenne des zones de contact (50) formées par une partie de la surface de la bague (3) agencée sans espace en correspondance avec une partie de la surface du cadre de renfort (2), permettant ainsi à des charges d'être transmises entre ladite bague (3) et ledit cadre de renfort (2),
et dans laquelle l'ensemble formé par ladite bague et ledit cadre de renfort (2) joints par le premier moyen de jonction (4) forme une structure unique (1) qui peut résister aux charges auxquelles le dossier de siège est soumis dans la direction x du véhicule.

2. Structure de dossier pour siège de véhicule automobile selon la revendication 1, dans laquelle la structure de dossier de siège (1) comprend des zones renforcées (11).

3. Structure de dossier pour siège de véhicule automobile selon la revendication 2, dans laquelle les zones renforcées (11) comprennent des zones du cadre de renfort (2) avec une section ayant un moment d'inertie supérieur, de sorte que le cadre de renfort (2) possède ne section variable le long de sa longueur.

4. Structure de dossier pour siège de véhicule automobile selon la revendication 2, dans laquelle les zones renforcées (11) comprennent des éléments de renfort supplémentaires (11.1) dans la structure de dossier de siège (1), où lesdits éléments de renfort supplémentaires (11.1) sont totalement ou partiellement superposés sur le cadre de renfort (2).

5. Structure de dossier pour siège de véhicule automobile selon la revendication 4, dans laquelle les éléments supplémentaires sont joints à la structure de dossier de siège (1) par un deuxième moyen de jonction (6).

6. Structure de dossier pour siège de véhicule automobile selon la revendication 1, dans laquelle la bague (3) comprend une première poutre de renfort qui relie la première partie latérale (3.1) de la bague (3) à la deuxième partie latérale (3.2) de la bague (3) et/ou une seconde poutre de renfort (3.6) qui relie la troisième partie supérieure (3.3) de la bague (3) à la quatrième partie inférieure (3.4) de la bague (3).

7. Structure de dossier pour siège de véhicule automobile selon la revendication 1, dans laquelle la bague intègre le boîtier (3.7) pour le moyen de guidage d'appuie-tête (10.1).

8. Structure de dossier pour siège de véhicule automobile selon la revendication 1, dans laquelle la bague intègre le boîtier (3.8) pour le moyen de retour automatique du dossier.

9. Structure de dossier pour siège de véhicule automobile selon la revendication 1, qui comprend de plus des composants fonctionnels (12) joints à ladite structure de dossier de siège (1) par un troisième moyen de jonction (7).

10. Structure de dossier pour siège de véhicule automobile selon la revendication 9, dans laquelle les composants fonctionnels (12) comprennent un coussin de sécurité gonflable, des accessoires de sécurité pour des sièges pour enfants, un support lombaire, une ceinture de sécurité fixée sur le siège, un accès au moyen d'actionnement du siège arrière, un accoudoir, un câblage ou des garnitures décoratives de différents types.

11. Structure de dossier pour siège de véhicule automobile selon la revendication 1, qui comprend de plus un quatrième moyen de jonction (8) destiné à se joindre à une base de siège (13).

12. Structure de dossier pour siège de véhicule automobile selon la revendication 11, dans laquelle l'union est établie par des feuilles de raccordement (9).

13. Structure de dossier pour siège de véhicule automobile selon la revendication 1, dans laquelle le premier moyen de jonction (4) comprend une jonction vissée du cadre de renfort (2) sur la bague (3) à l'aide d'une vis filetée dans un écrou qui est logé et retenu dans un boîtier (3.9) situé dans la bague (3).

14. Structure de dossier pour siège de véhicule automobile selon la revendication 1, dans laquelle le premier moyen de jonction (4) comprend une jonction rivetée du cadre de renfort (2) sur la bague (3) à l'aide d'un rivet.

15. Structure de dossier pour siège de véhicule automobile selon la revendication 1, dans laquelle le premier moyen de jonction (4) comprend une jonction filetée du cadre de renfort (2) sur la bague (3) à l'aide d'une vis autotaraudeuse qui est vissée directement sur la bague de plastique (3).
